**Europäisches Patentamt**

**European Patent Office**

**Office européen des brevets**

(19)

(11) Veröffentlichungsnummer: **0 241 761**
**A2**

(12) **EUROPÄISCHE PATENTANMELDUNG**

(21) Anmeldenummer: **87104205.7**

(22) Anmeldetag: **21.03.87**

(51) Int. Cl.⁴: **G01N 27/22**

(30) Priorität: **16.04.86 DE 3612727**

(43) Veröffentlichungstag der Anmeldung:
**21.10.87 Patentblatt 87/43**

(84) Benannte Vertragsstaaten:
**DE ES FR GB IT SE**

(71) Anmelder: **ROBERT BOSCH GMBH**
**Postfach 50**
**D-7000 Stuttgart 1(DE)**

(72) Erfinder: **Fedter, Horst**
**Wiedenbachweg 14**
**D 7582 Bühlertal(DE)**
Erfinder: **Grünwald, Werner, Dr. Dipl.-Phys.**
**Robert-Schumanstrasse 21**
**D-7016 Gerlingen(DE)**
Erfinder: **Nolting, Peter, Dipl.-Ing.**
**Scheffelweg 24**
**D-7582 Bühlertal(DE)**
Erfinder: **De la Prieta, Claudio**
**Schwarzwaldstrasse 81**
**D-7000 Stuttgart 80(DE)**
Erfinder: **Schmid, Kurt**
**Schlossstrasse 55**
**D-7257 Ditzingen-Schöckingen(DE)**

(54) **Feuchtesensor.**

(57) Es werden ein Verfahren zur Herstellung eines Sensors zur Bestimmung der relativen Feuchte aufgrund der Kapazitätsänderung eines keramischen Materials, ein Stoffgemisch, das bei diesem Verfahren eingesetzt wird sowie ein nach dem Verfahren hergestellter Sensor vorgeschlagen. Das Stoffgemisch enthält $BaRuO_3$, $V_2O_5$ und $Na_2WO_4$ im Gewichtsverhältnis $(1 \pm 0,4): (1 \pm 0,4):(0,6 \pm 0,2)$, insbesondere 1:1:0,6. Dieses Stoffgemisch wird mit einer Glaspaste sowie gegebenenfalls einem Verdünner zu einer druckfähigen Paste gemischt, die dann auf ein Trägerplättchen aus $Al_2O_3$, das zuvor mit kammartig ineinandergreifenden Elektroden bedruckt wurde, aufgedruckt und bei 550 bis 850 °C eingebrannt wird. Der so entstandene Sensor weist insbesondere bei einer relativen Feuchte oberhalb 60 % eine hervorragende Empfindlichkeit auf und eignet sich daher insbesondere als Betauungssensor für die Windschutzscheiben von Kraftfahrzeugen.

$Ba\,RuO_3 + V_2O_5 + Na_2WO_4$
1 : 1 : 0,6

## Feuchtesensor

### Stand der Technik

Die Erfindung geht aus von einem Verfahren zur Herstellung eines Feuchtesensors nach der Gattung des Hauptanspruchs und bezieht sich ebenso auf ein Stoffgemisch zur Herstellung eines solchen Sensors sowie auf einen Sensor selbst. Es sind kapazitive Feuchtesensoren bekannt, bei denen eine Kunststoffolie reversibel Wasserdampf aufnimmt und abgibt und dabei die Kapazität ändert. Derartige Sensoren sind jedoch wegen der Verwendung von Polymerfolien mechanisch verhältnismäßig empfindlich und durch die Tatsache, daß die Elektroden zumindest auf die Polymerfolie aufgedampft werden, in ihrer Herstellung ziemlich aufwendig, so daß solche Sensoren für eine Massenherstellung nur bedingt geeignet sind. Außerdem kann es im Bereich hoher relativer Feuchte (>90 %) zu Falschmessungen kommen, durch einen sekundären Sorptionsaffekt, der auch bei Rückkehr zu kleineren Feuchten noch anhalten kann.

### Vorteile der Erfindung

Das erfindungsgemäße Verfahren mit den kennzeichnenden Merkmalen des Hauptanspruchs sowie der nach diesem Verfahren hergestellte Feuchtesensor haben demgegenüber den Vorteil, daß der Sensor in sehr einfacher Weise und daher auch in großen Stückzahlen wirschaftlich hergestellt werden kann, daß er unempfindlich ist gegen mechanische Beschädigungen und daß er gerade im Bereich hoher relativer Feuchte sehr gute Ergebnisse liefert.

Durch die in den Unteransprüchen aufgeführten Maßnahmen sind vorteilhafte Weiterbildungen und Verbesserungen des im Hauptanspruches angegebenen Verfahrens möglich. Besonders vorteilhaft ist es, von einem Stoffgemisch auszugehen, welches $BaRuO_3$, $V_2O_5$ und $Na_2WO_4$ im Gewichtsverhältnis 1:1:0,6 enthält. Es ist weiter vorteilhaft, aus diesem Pulvergemisch unter Zusatz einer Glaspaste und gegebenenfalls eines Verdünners eine druckfähige Paste herzustellen und diese auf ein Trägerplättchen aus $Al_2O_3$ aufzudrucken, das zuvor mit kammartig ineinandergreifenden Elektroden bedruckt wurden.

### Zeichnung

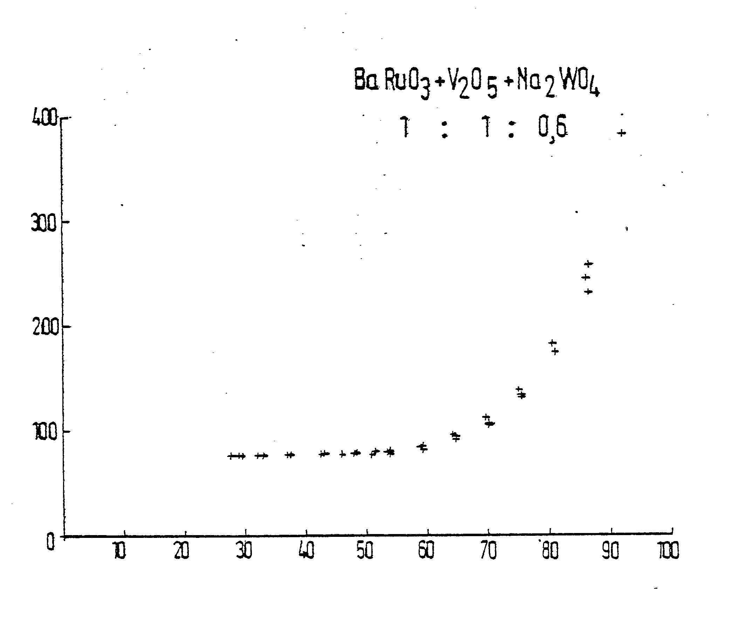

Ein Ausführungsbeispiel der Erfindung ist in der nachfolgenden Beschreibung erläutert. Die Figur zeigt für das obengenannte besonders bevorzugte Gewichtsverhältnis der drei Komponenten die Abhängigkeit der Kapazität von der relativen Feuchte.

### Beschreibung des Ausführungsbeispiels

$BaRuO_3$, $V_2O_5$ und $Na_2WO_4$ werden im Gewichtsverhältnis 1:1:0,6 vorgemischt und dieser Mischung in einer Pulvermühle homogenisiert, danach 1 bis 2 Stunden lang bei 850 °C vorgesintert und dann erneut in einer Pulvermühle aufgemahlen, so daß die Korngröße vorzugsweise bei 1 bis 10 $\mu$m liegt. Diesem Pulver werden dann etwa 15 % einer Glaspaste als Bindemittel zugesetzt. Dabei hat sich eine solche vom Typ 4011C der Firma Electronic Science Laboratory (ESL) besonders bewährt. Die so entstandene Paste wird gegebenenfalls noch mit so viel eines Verdünners, bestehend aus Benzylalkohol und Terpineol, versetzt, daß sie druckfähig wird. Danach wird die druckfähige Paste auf ein Trägerplättchen aus Aluminiumoxid mit den Abmessungen 6 x 50 mm, auf welchem sich kammartig ineinandergreifende Elektroden aus Platin, Gold oder Palladium/Silber mit entsprechenden Anschlüssen befinden, aufgedruckt. Dabei weist jede der Elektroden etwa 50 Zähne auf. Nach 15 Minuten Zwischentrocknung bei 100 °C wird die Sensorschicht auf dem Trägerplättchen 1 Stunde bei 550 °C eingebrannt.

Dieser Sensor wird als Kapazität in bekannter Weise in eine Kapazitätsmeßbrücke geschaltet. In der Figur ist ein Beispiel in Form der Abhängigkeit der Kapazität von der relativen Feuchte grafisch dargestellt. Die Kennlinie war über etwa 1000 Feuchtewechsel zwischen 30 und 95 % relativer Feuchte stabil und zeigt, daß sich mit dem als Beispiel gewählten Sensor die Feuchte zwischen 60 und etwa 95 % relativer Feuchte messen läßt. Ein solcher Sensor läßt sich daher beispielsweise in hervorragender Weise als Betauungssensor für Windschutzscheiben einsetzen, indem bei Überschreiten einer bestimmten Grenze der relativen Feuchte zum Beispiel das Gebläse automatisch eingeschaltet wird. Durch Verfeinerung der Meßtechnik läßt sich jedoch erreichen, daß sich auch noch geringere Werte der relativen Feuchte mit diesem Sensor messen lassen.

**Ansprüche**

1. Verfahren zur Herstellung eines Sensors zur Bestimmung der relativen Feuchte aufgrund der Kapazitätsänderung eines keramischen Materials, dadurch gekennzeichnet, daß ein Gemisch aus $BaRuO_3$, $V_2O_5$ und $Na_2WO_4$ homogenisiert, vorgesintert und mit einer Glaspaste versetzt wird, daß diese Mischung zwischen zwei Elektroden auf einen Träger aufgebracht und das Ganze dann eingebrannt wird.

2. Verfahren nach Anspruch 1, dadurch gekennzeichnet, daß ein Gemisch aus $BaRuO_3$, $V_2O_5$ und $Na_2WO_4$ im Verhältnis 1:1:0,6 Gewichtsteilen homogenisiert, bei ca. 850 °C vorgesintert und erneut aufgemahlen wird, daß diesem Pulver 10 bis 20 Gew.-% einer Glaspaste und gegebenenfalls so viel eines Verdünners zugesetzt wird, daß die entstehende Paste druckfähig ist, daß diese Paste sodann auf ein Trägerplättchen aus $Al_2O_3$, das zuvor mit kammartig ineinandergreifenden Elektroden bedruckt wurde, aufgedruckt und das Ganze dann bei 550 bis 850 °C, vorzugsweise bei 550 °C, eingebrannt wird.

3. Stoffgemisch zur Herstellung eines Sensors zur Bestimmung der relativen Feuchte aufgrund der Kapazitätsänderung eines keramischen Materials, gekennzeichnet durch einen Gehalt an $BaRuO_3$, $V_2O_5$ und $Na_2WO_4$.

4. Stoffgemisch nach Anspruch 3, dadurch gekennzeichnet, daß es aus $BaRuO_3$, $V_2O_5$ und $Na_2WO_4$ im Gewichtsverhältnis $(1 \pm 0,4):(1 \pm 0,4):(0,6 \pm 0,2)$ besteht.

5. Stoffgemisch nach Anspruch 4, dadurch gekennzeichnet, daß es aus $BaRuO_3$, $V_2O_5$ und $Na_2WO_4$ im Gewichtsverhältnis 1:1:0,6 besteht.

6. Sensor zur Bestimmung der relativen Feuchte aufgrund der Kapazitätsänderung eines keramischen Materials, hergestellt nach dem Verfahren nach einem der Ansprüche 1 und 2 aus einem Stoffgemisch nach einem der Ansprüche 3 bis 5.

7. Verwendung eines Sensors nach Anspruch 6 im Fahrgastraum von Kraftfahrzeugen.

8. Verwendung nach Anspruch 7, dadurch gekennzeichnet, daß der Sensor als Betauungssensor für Windschutzscheiben eingesetzt wird.